(19) **Europäisches Patentamt / European Patent Office / Office européen des brevets**

(11) **EP 2 954 429 B1**

(12) **FASCICULE DE BREVET EUROPEEN**

(45) Date de publication et mention
de la délivrance du brevet:
**09.06.2021 Bulletin 2021/23**

(21) Numéro de dépôt: **14702297.4**

(22) Date de dépôt: **04.02.2014**

(51) Int Cl.:
*B25J 9/16* (2006.01)        *B25J 15/12* (2006.01)
*B25J 18/06* (2006.01)        *G06F 17/12* (2006.01)

(86) Numéro de dépôt international:
**PCT/EP2014/052169**

(87) Numéro de publication internationale:
**WO 2014/122134 (14.08.2014 Gazette 2014/33)**

(54) **PROCÉDÉ DE COMMANDE D'UN ROBOT DÉFORMABLE, MODULE ET PROGRAMME D'ORDINATEUR ASSOCIÉS**

VERFAHREN ZUR STEUERUNG EINES VERFORMBAREN ROBOTERS SOWIE ZUGEHÖRIGES MODUL UND COMPUTERPROGRAMM

METHOD FOR CONTROLLING A DEFORMABLE ROBOT, AND RELATED MODULE AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.02.2013 FR 1351106**

(43) Date de publication de la demande:
**16.12.2015 Bulletin 2015/51**

(73) Titulaire: **INRIA - Institut National de Recherche en Informatique et en Automatique**
**78150 Le Chesnay (FR)**

(72) Inventeur: **DURIEZ, Christian**
**F-59650 Villeneuve d'Ascq (FR)**

(74) Mandataire: **Palacci, Jeremie**
**Cabinet Netter**
**36, avenue Hoche**
**75008 Paris (FR)**

(56) Documents cités:
• **Christian Duriez: "Real-time haptic simulation of medical procedures involving deformations and device-tissue interactions", Habilitation à diriger des recherches, 5 février 2013 (2013-02-05), XP055086358, Extrait de l'Internet: URL:http://tel.archives-ouvertes.fr/docs/0 0/78/51/18/PDF/HDR_duriez.pdf [extrait le 2013-10-31]**

• **CHRISTIAN DURIEZ: "Control of elastic soft robots based on real-time finite element method", 2013 IEEE INTERNATIONAL CONFERENCE ON ROBOTICS AND AUTOMATION, mai 2013 (2013-05), pages 3982-3987, XP055086355, DOI: 10.1109/ICRA.2013.6631138 ISBN: 978-1-46-735641-1**

• **François Faure ET AL: "SOFA: A Multi-Model Framework for Interactive Physical Simulation" In: "Soft Tissue Biomechanical Modeling for Computer Assisted Surgery", 2012, Springer Berlin Heidelberg, Berlin, Heidelberg, XP055086368, ISSN: 1868-2006 ISBN: 978-3-64-229014-5 vol. 11, pages 283-321, DOI: 10.1007/8415_2012_125, le document en entier**

• **TAHMASEBI A M ET AL: "Software structure design for a haptic-based medical examination system", HAPTIC AUDIO VISUAL ENVIRONMENTS AND THEIR APPLICATIONS, 2005 IREE INTERNATIONAL WORKSHO ON OCT. 1, 2005, PISCATAWAY, NJ, USA,IEEE, octobre 2005 (2005-10), pages 88-93, XP010858674, DOI: 10.1109/HAVE.2005.1545658 ISBN: 978-0-7803-9376-9**

EP 2 954 429 B1

**Description**

La présente invention concerne un procédé de commande d'un robot comportant au moins une partie déformable par un ensemble d'actionneur(s), chaque point d'un ensemble de point(s) dit(s) point(s) effecteur(s), du robot, devant suivre une trajectoire déterminée, le robot étant défini par un modèle de nœuds et une matrice K définissant une variation des forces internes du robot en chaque nœud en fonction de la variation de position des nœuds.

Pour rappel, un actionneur est un organe du robot qui fournit un effort, sous la forme d'une force et/ou d'une pression et/ou d'un couple, dont l'intensité est fonction d'une commande qu'il reçoit.

Les commandes «classiques» pour le contrôle d'un robot se basent, en général, sur une modélisation de la cinématique entre le ou les actionneurs du robot et au moins un point du robot auquel on souhaite appliquer un mouvement déterminé, qu'on appelle point effecteur du robot.

Cette modélisation est relativement facile à obtenir si la cinématique correspond à une chaîne articulaire : le robot se compose alors de segments rigides sur lesquels des articulations (souvent considérées comme «parfaites») sont placées, et éventuellement des encodeurs pour pouvoir mesurer les mouvements relatifs de ces segments. La commande calcule la configuration du robot à partir d'un calcul relativement simple, souvent analytique, réalisable en temps-réel.

Les robots flexibles ou déformables existants, i.e. comportant au moins une partie en matériau flexible ou déformable, sont particulièrement bien adaptés pour évoluer dans des environnements fragiles, par exemple, le corps humain pour la robotique chirurgicale. Ils sont aussi plus robustes (meilleure résistance aux chocs) et peuvent être plus faciles à fabriquer (notamment par impression 3D).

La plupart des robots flexibles ou déformables réellement utilisés sont limités à un faible nombre de degrés de liberté, par exemple les robots comportant une pince flexible, qui sont utilisés pour la micro manipulation. Dans ces conditions, la cinématique reste relativement simple et peut, tout simplement, être mesurée, ou pré-calculée.

Toutefois, contrairement aux robots rigides, le nombre de degrés de liberté des robots souples peut être infini, des actionneurs pouvant être placés en une infinité de points, puis être contrôlés pour permettre à chaque point effecteur de suivre le mouvement déterminé qui lui est associé. Mais les travaux sur des robots flexibles ou déformables multi-actionnés buttent sur le problème de leur contrôle, notamment en raison du nombre élevé de degrés de liberté d'actionnement.

Par ailleurs, les méthodes par éléments finis ou FEM (en anglais « Finite Element Method ») sont utilisées pour modéliser les robots flexibles lorsque, connaissant les commandes ou efforts appliqués sur un robot flexible, on cherche à déterminer le comportement de ce robot flexible. Le document C. Duriez, "Real-time haptic simulation of medical procédures involving déformations and device-tissue interactions", Thèse d'habilitation, 2013, décrit un procédé FEM de simulation haptique en temps réel de la déformation d'un tissu par l'action d'un robot flexible.

Même si le calcul de la déformation par un modèle FEM peut se faire en temps réel, la difficulté du point de vue du contrôle est d'obtenir la valeur de l'actionnement qui va générer la déformation souhaitée, c'est une sorte d'inversion du modèle qui est donc nécessaire.

Or, l'utilisation de la FEM pour résoudre le problème inverse n'a pas pu être mise en œuvre jusqu'à présent car les temps de calcul généralement nécessaires sont prohibitifs.

La présente invention vise à contribuer à pallier certains de ces problèmes rencontrés dans le pilotage des actionneurs de robots déformables, en proposant une technique avantageuse basée sur une inversion optimisée du modèle FEM en temps-réel.

A cet effet, suivant un premier aspect, l'invention propose un procédé tel que défini par la revendication 1.

Un tel procédé permet de piloter des robots déformables, particulièrement dans le cas où plusieurs actionneurs permettent de piloter la déformation d'au moins une partie, composée d'un matériau flexible, du robot, afin de créer un mouvement désiré sur un ou plusieurs points effecteurs terminal, tout en réduisant considérablement la charge de calcul nécessaire au pilotage des actionneurs.

Dans des modes de réalisation, le procédé de commande d'un robot suivant l'invention comporte en outre une ou plusieurs des caractéristiques suivantes :

- le vecteur $\delta$ comporte en outre au moins un sous-ensemble de ligne(s) indiquant un déplacement d'un point du robot soumis à des contraintes extérieures au robot, et le vecteur $\lambda$ comporte en outre un sous-ensemble correspondant de ligne(s) indiquant des valeurs de forces exercées par les contraintes extérieures au robot correspondant au déplacement indiqué ;
- la position correspondant à la trajectoire déterminée d'un point effecteur est soustraite à la position du point effecteur déterminée par interpolation, associée à des coefficients d'interpolation respectifs, de la position d'un ensemble desdits nœud(s) pour obtenir le sous-ensemble de lignes du vecteur $\delta(x)$ relatives à l'effecteur, et selon lequel, dans ledit même sous-ensemble de lignes de la matrice jacobienne J, les valeurs dans les colonnes qui correspondent auxdits nœuds, sont fonction desdits coefficients d'interpolation ;

- un point de fixation d'un actionneur est une interpolation de nœud(s) associé(s) chacun à un coefficient d'interpolation non nul, et au moins une ligne de la matrice J est déterminée en fonction de la direction d'actionnement dudit l'actionneur, chaque terme de ladite ligne étant nul à l'exception de ceux sur les colonnes dudit nœud ou desdits nœuds ;

- à l'étape iv/ l'équation $\delta$ = W. $\lambda$ + $\delta_0$ est résolue par un algorithme itératif de type Gauss-Seidel, intégrant les contraintes liées aux directions d'actionnement, aux limites de butée et/ou à un effort maximum exercé par au moins un actionneur, et/ou des caractéristiques de contraintes extérieures au robot.

Suivant un deuxième aspect, la présente invention propose un programme d'ordinateur tel que défini par la revendication 6.

Suivant un troisième aspect, la présente invention propose un module de commande tel que défini par la revendication 7.

Ces caractéristiques et avantages de l'invention apparaîtront à la lecture de la description qui va suivre, donnée uniquement à titre d'exemple, et faite en référence aux dessins annexés, sur lesquels :

- la figure 1 représente schématiquement un robot déformable multi-actionné dans un mode de réalisation de l'invention ;
- la figure 2 est un organigramme d'étapes d'un procédé dans un mode de réalisation de l'invention ;
- la figure 3 représente un vecteur $\delta$ ;
- la figure 4 comporte deux sections 4a et 4b, qui représentent un robot déformable soumis à des actionnements.

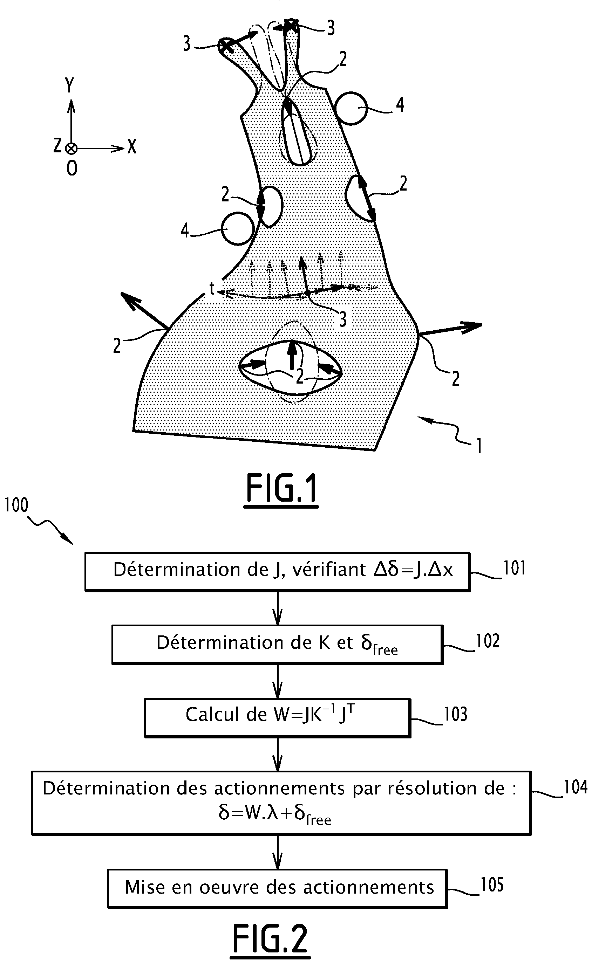

La figure 1 représente un robot 1 comportant une structure en matériau déformable, par exemple en silicone souple.

L'invention propose un procédé de commande du robot 1, itérant un ensemble 100 d'étapes représenté en figure 2.

Dans le cas considéré, le robot 1 est un robot en en 3 dimensions (3D), mobile en 3D, dans un espace associé à un référentiel, nommé Ref, associé à un point d'origine O et à 3 axes X, Y, Z.

Le robot 1 comporte un nombre p d'actionneurs 2, conférant une déformation au robot. Le nombre p est quelconque et est choisi, dans l'exemple considéré, égal à huit.

L'actionnement 1 relatif à un actionneur peut être de nature diverse et peut comprendre par exemple :

- une rotation ou une translation d'une partie de la structure du robot par une liaison sur un moteur électrique, éventuellement équipé d'un réducteur, et/ou
- un mouvement obtenu par traction d'un câble attaché à la structure, d'un côté, et à un moteur équipé d'une poulie de l'autre, et/ou
- une ou des poches élastiques à l'intérieur de la structure permettant un actionnement par air comprimé ou hydraulique, et/ou
- un multi-actionnement réparti, par positionnement sur la structure d'un grand nombre d'actionneurs (par exemple piezzoélectriques ou par polymères électroactifs ou par matériau à mémoire de forme...) , qui créent une déformation locale de la structure du robot.

L'effort appliqué par l'actionneur sur la structure du robot peut comprendre une force, une pression et/ou un couple.

Par ailleurs, le robot comporte en outre m points 3 du robot 1, nommé(s) point(s) effecteur(s) du robot, au(x)quel(s) une trajectoire respective est imposée.

Le nombre m est quelconque et est choisi, dans le cas considéré, égal à trois.

Ainsi le point effecteur $P_{eff_j}$, j = 1 à m, doit se trouver à une position imposée, correspondant à un point $P_{imp_j}$, à un $i^{ème}$ pas d'itération du procédé de commande du robot. Sa trajectoire imposée peut être modifiée à tout moment, notamment dans le cadre d'une application en temps réel.

Dans un mode de réalisation, l'environnement de mobilité du robot 1 comporte un nombre n d'obstacles 4. Le nombre n est quelconque et est choisi dans le cas considéré, égal à deux. Ces obstacles peuvent être statiques (i.e. ne pas bouger dans le référentiel) ou dynamiques, avec un comportement connu.

On dispose d'un modèle de l'interaction mécanique entre les obstacles 4 et le robot 1, qui est par exemple de type contact, liaison glissière, appui plan etc. Cette modélisation sera notamment utilisée pour adapter la commande du robot en fonction des obstacles.

Le robot déformable 1 est défini par un modèle comprenant un ensemble de nœuds et par une matrice tangente K associée, dite matrice de raideur, définissant les forces internes en chaque nœud en fonction des positions des nœuds, qui permettent la modélisation des déformations, notamment non-linéaires, du robot.

**3**

Dans le cas présent, le robot 1 est modélisé par un modèle à éléments finis ou FEM, associé à un maillage de N nœuds (cf. notamment C. Felippa, « A systematic approach to the element-independent corotational dynamics of finite elements », Technical Report, Center for Aerospace Structures, 2000).

Toute autre méthode permettant de définir un modèle physique de la déformation du robot 1 peut être utilisée à la place, par exemple une formulation de type « meshless », une méthode de Galerkine, une méthode XFEM etc. Cependant, l'utilisation d'une telle méthode ne fait pas partie de l'invention revendiquée.

Selon l'invention, en référence à la figure 2, un procédé itératif 100 est mis en œuvre pour déterminer à l'issue de chaque pas d'itération, le contenu de la commande de chaque actionneur du robot 1 permettant que les points effecteurs suivent au maximum les trajectoires désirées, tout en prenant en compte les obstacles.

Dans un mode de réalisation, ce procédé itératif 100 est mis en œuvre par un module de pilotage du robot 1.

Ce module de pilotage du robot comprend une mémoire et un microprocesseur. Des données, par exemple définissant le modèle FEM, les trajectoires des effecteurs et les obstacles, ainsi que des instructions logicielles, sont stockées dans cette mémoire.

Et les étapes du procédé 100 telles que décrites dans les revendications indépendantes 1 et 7 sont mises en œuvre par le module de pilotage du robot, lorsque les instructions logicielles stockées dans la mémoire sont exécutées sur le microprocesseur.

Ainsi à un $i^{ème}$ pas d'itération du procédé 100 dans un mode de réalisation de l'invention, les étapes 101 à 105 suivantes sont mises en œuvre.

Soit x, le vecteur comprenant les coordonnées des N points. On notera $x_{i-1}$ le vecteur qui comprend les coordonnées courantes des N points définissant le robot, à l'issue de la mise en œuvre des actionnements déterminés lors de l'itération i-1 du procédé 100.

Ainsi dans une étape 101, on considère ce vecteur $x_{i-1}$ de valeurs connues, qui définit la position du robot 1 telle qu'obtenue à l'issue de l'itération i-1 du procédé 100, les coordonnées ayant été mesurées (détermination en boucle fermée), ou estimées (détermination en boucle ouverte) à partir du modèle et des actionnements déterminés à l'itération i-1.

Le vecteur $x_i$ comprendra de la même façon les coordonnées des N points définissant le robot à l'issue de l'itération courante i du procédé 100, une fois mis en œuvre les actionnements qui seront déterminés lors de cet itération i.

On détermine la position courante des n obstacles, la position courante des p actionneurs ainsi que la position imposée $P_{impj}$ souhaitée pour chacun des m points effecteurs.

Un degré de liberté est une mobilité possible (autorisée ou non) dans l'espace considéré. Chaque nœud du robot a un certain nombre de degrés de liberté (par exemple translation selon un à trois axes orthogonaux et/ou rotations selon un ou des axes). Le nombre total de degrés de liberté d'un objet déformable, c'est donc le nombre de degrés de liberté par nœud *N.

La notion de degré de liberté s'applique aussi pour les points effecteurs et pour les actionneurs, ainsi que les liaisons mécaniques, ou contraintes, liées aux obstacles.

Pour un point effecteur, il s'agit du nombre de mobilités contrôlées (par exemple, si on contrôle la position d'un point effecteur, il y a 3 degrés de libertés, donc 3 lignes correspondant à ce point effecteur dans $\delta$ en revanche, si on contrôle 3 orientations en plus, ça fait 6 degrés de liberté au total dans $\delta$ pour ce point effecteur).

Pour chaque actionneur, en général, il n'y a qu'un seul degré de liberté (par exemple, une translation ou une rotation). Cependant, il peut exister des actionneurs combinés (une translation + une rotation). Dans ce cas, l'actionneur aura 2 degrés de liberté.

Pour chaque obstacle, on considère le nombre de degrés de liberté supprimés : par exemple un point sur un plan n'est contraint que selon une direction (les deux autres restent libres), donc la contrainte a 1 degré de liberté. En revanche, contraindre un point à suivre une ligne ou une courbe nécessite une contrainte à 2 degrés de liberté. Pour des liaisons plus complexes, incluant translation et rotation, on peut aller jusqu'à 6 degrés de liberté supprimés.

On considère à présent le vecteur $\delta(x)$, fonction non linéaire du vecteur x.

$\delta$ comporte des lignes relatives aux points effecteurs qui indiqueront, pour chaque point effecteur considéré successivement à l'issue de l'itération i, les coordonnées de l'écart entre le point de trajectoire imposée pour ce point effecteur et la position de ce point effecteur à l'issue de l'itération i.

Dans le cas considéré, pour chaque point effecteur, il y a une ligne dans $\delta$ par degré de liberté du point effecteur.

Les points effecteurs sont considérés en tant que points interpolés à partir de la position des N nœuds donnée par $x_i$.

Avec m points effecteurs, il faudra 3*m lignes dans $\delta$ pour contrôler la position de ces deux points effecteurs avec 3 degrés de liberté chacun en translation relativement aux axes X, Y, Z, ou 6*m lignes pour contrôler la position et l'orientation de ces m points effecteurs avec 6 degrés de liberté chacun.

Le vecteur $\delta(x)$ comprend ensuite des lignes qui indiqueront, pour chaque actionneur considéré successivement, le déplacement de la zone actionnée dans la direction d'actionnement en fonction de la position des nœuds interpolant la zone actionnée et de la possible modification de la direction de l'actionnement (en effet, quand la structure du robot se déforme et que l'on tire sur une zone avec un câble, la direction du câble change).

On notera que quand l'actionneur est de type pneumatique ou hydraulique, le déplacement de la zone actionnée indique une variation de volume.

Dans le cas considéré, pour chaque actionneur, il y a une ligne dans $\delta$ par degré de liberté de l'actionnement.

Le vecteur $\delta(x)$ comprend enfin des lignes qui indiqueront, pour chaque obstacle considéré successivement, la contrainte associée à l'obstacle en la zone concernée du robot (par exemple le déplacement d'un point du robot soumis à cet obstacle en tant qu'interpolation de la position des N nœuds donnée par $x_i$).

Dans le cas considéré, pour chaque obstacle, il y a une ligne dans $\delta$ par degré de liberté possiblement supprimé par l'obstacle. Par exemple, un contact d'un point avec un plan peut supprimer un degré de liberté dans le sens normal au plan si le point considéré touche le plan (sinon, il ne supprime rien) : on dira dans ce cas que la contrainte est active et supprime un degré de liberté ; sinon, elle ne supprime rien.

Le vecteur $\delta(x)$ est donc une fonction de l'espace $R^N$ vers l'espace $R^M$, où M est égal à la somme des degrés de liberté cumulés des m points effecteurs, des degrés de liberté cumulés des p actionneurs et des degrés de liberté cumulés des n obstacles.

On considère à présent la matrice J, qui est la matrice jacobienne, par rapport à x, du vecteur $\delta(x)$.

Cette matrice J permet ainsi d'écrire une variation du vecteur $\delta(x)$ en fonction d'une variation du vecteur x de manière linéaire :

$$\Delta \delta (x) = J. \Delta x \qquad \text{équation (1)}$$

Les variations considérées sont par exemple celles entre les itérations i-1 et i ; ainsi $\Delta x = x_i - x_{i-1}$. Ainsi, les valeurs dans $\Delta\delta$ relatives aux actionneurs indiquent les déplacements des actionneurs pendant cette variation $\Delta x$, ie entre les itérations i-1 et i.

On considère en outre le vecteur $\lambda(x)$, de même taille M que le vecteur $\delta$, chaque ligne de $\lambda$ correspondant à une ligne de $\delta$. Ainsi la ligne n°k de $\delta$ concerne le même degré de liberté du même point effecteur ou du même actionneur ou du même obstacle, que celui concerné par la ligne n°k de $\lambda$.

Dans $\lambda$, toutes les lignes correspondant aux points effecteurs ont une valeur nulle.

A chaque ligne pour laquelle dans $\delta$, il sera indiqué un déplacement d'actionneur, il figurera dans $\lambda$ l'intensité de l'effort (force, pression, couple) correspondant exercé par l'actionneur sur le robot 1.

A chaque ligne pour laquelle dans $\delta$, il est indiqué une contrainte d'obstacle, il figurera dans $\lambda$ l'intensité de l'effort correspondant exercé par l'obstacle sur le robot 1 correspondant au degré de liberté considéré à cette ligne.

Les traitements réalisés au cours de l'itération i du procédé 100 vont permettre de déterminer les valeurs des vecteurs $\delta$ et $\lambda$, et par là de connaître les valeurs d'actionnement à commander aux actionneurs.

Les valeurs prises par la matrice J sont maintenant déterminées.

On considère que J est constant pendant une itération.

Les variations de $\delta$ durant une itération sont déterminées par l'équation (1).

Cette matrice J comporte un nombre M de lignes égales au nombre de lignes de $\delta$, et un nombre de colonnes égal à 3N dans le cas considéré (6N dans le cas où on considère 6 degrés de liberté pour les nœuds).

Ainsi la ligne n°k de J concerne le même degré de liberté du même point effecteur ou du même actionneur ou du même obstacle, que celui concerné par la ligne n°k de $\delta$.

Ainsi à chaque ligne de $\delta$ relative à un degré de liberté d'un point effecteur correspond une ligne dans la matrice jacobienne J.

Si le point effecteur est un nœud du modèle, alors la ligne de la matrice J qui lui est associé pour un degré de liberté donné, i.e. selon l'axe X, Y ou Z, est remplie de 0 sauf pour la coordonnée relative à cet axe, (ou encore selon une rotation rX, rY, rZ autour de l'axe selon un axe X, Y ou Z) du nœud sur cette ligne pour ce nœud, où la valeur vaut 1.

Si le point effecteur ne correspond pas à un nœud, mais à un point placé dans un élément du maillage entre plusieurs nœuds, c'est-à-dire qu'il résulte d'une fonction d'interpolation de ces nœuds, on utilise cette fonction d'interpolation pour construire les lignes de la matrice J relatives à ce point effecteur (cf. notamment C. Duriez, C. Guébert, M. Marchai, S. Cotin, and L. Grisoni, « Interactive simulation of flexible needle insertions based on constraint models », International Conférence on Medical Image Computing and Computer Assisted Intervention, Londres, Royaume-Uni, 2009, pp. 291-299; http://hal.inria.fr/inria-00540334). Pour chaque ligne correspondant à un degré de liberté respectif, on a alors une valeur non nulle uniquement au niveau de ces nœuds et les valeurs utilisées correspondent au poids associé à ce nœud dans la fonction d'interpolation.

De même, à chaque ligne de $\delta$ relative à un degré de liberté d'un actionneur ou d'un obstacle correspond une ligne dans la matrice jacobienne J.

Par exemple, si l'actionneur choisi est un câble, la direction d dans laquelle le câble tire (correspondant à la direction de déplacement de cet actionneur, i.e. ou encore au degré de liberté du câble), est stockée dans cette ligne de la matrice J, en choisissant les colonnes qui correspondent au(x) nœud(s) sur le(s)quel(s) le câble est attaché.

Si on dérive une ligne de $\delta$ correspondant au déplacement d'un câble dans la direction d'actionnement et à un point d'actionnement sur la structure du robot, alors on obtient dans la matrice J à la ligne correspondant à ce point d'actionnement pour la direction d'actionnement :

- des 0 pour toutes les colonnes correspondant à des nœuds qui n'interpolent pas directement le point d'actionnement.
- des valeurs non nulles pour toutes les colonnes qui correspondent à des noeuds qui interpolent directement le point d'actionnement. Dans chacune des colonnes selon X, Y et Z d'un nœud, on retrouve la direction (unitaire) d'actionnement multiplié par le poids du nœud dans l'interpolation.

Par exemple :

=> si le point actionnement P résulte de l'interpolation suivante : $P = \alpha.N_a + \beta.N_b + \gamma\text{-}N_c$ où $N_a, N_b$ et $N_c$ sont les positions respectives, dans (O, X, Y, Z) dans le cas présent de trois des N nœuds, et $\alpha$, $\beta$ et $\gamma$ sont les poids de l'interpolation avec la norme de $\alpha$, $\beta$ et $\gamma$ compris entre 0 et 1 et la somme de $\alpha$, $\beta$ et $\gamma$ est égale à 1.

$$d = \begin{bmatrix} d_x \\ d_y \\ d_z \end{bmatrix}$$

et si la direction d'actionnement est indiquée par le vecteur unitaire

alors la ligne correspondante de $J = [\,0\ 0\ ...\ 0\ \alpha^*d_x\ \alpha^*d_y\ \alpha^*d_z\ 0\ 0\ ....\ 0\ \beta^*d_x\ \beta^*d_y\ \beta^*d_z\ 0\ 0.....\ 0\ \gamma^*d_x\gamma^*d_y\gamma^*d_z\ 0\ 0\ ...\ 0]$,

où $\alpha^*d_x$ respectivement $\alpha^*d_y$ respectivement $\alpha^*d_z$ est le terme de la ligne considérée en la colonne relative à l'axe X, respectivement Y, respectivement Z du nœud considéré de position $N_a$ ; $\beta^*d_x$, respectivement $\beta^*d_y$, respectivement $\beta^* d_z$ est le terme en la colonne relative à l'axe X, respectivement Y, respectivement Z du nœud considéré de position $N_b$ et $z^*d_x$, $z^*d_y$ $z^*d_z$ est le terme en la colonne relative à l'axe X, respectivement Y, respectivement Z du nœud considéré de position $N_c$

Pour un actionneur en pression, les éléments de maillage, par exemple des triangles, qui gonflent ou dégonflent avec la pression, sont sélectionnés. Si la pression est uniforme dans la cavité, l'ensemble des triangles concernés contribuent à la même ligne sur la matrice J en utilisant la normale au triangle ainsi qu'une pondération proportionnelle à l'aire du triangle. Au niveau de la construction de J, cela correspond à une manière classique d'imposer une contrainte en pression sur un modèle par éléments finis. Dans ce cas, la ligne de $\delta$ correspondant à cet actionneur contient une valeur du volume de la cavité au niveau de la ligne correspondant à la contrainte, et la ligne correspondante de $\lambda$ contiendra la valeur de pression utilisée.

Ainsi, de façon générale, un point de fixation d'un actionneur est une interpolation de nœud(s) associé(s) chacun à un coefficient d'interpolation non nul, et la direction de déplacement de l'actionneur est indiquée dans une ligne de la matrice J, chaque terme de ladite ligne étant nul à l'exception de ceux dudit nœud ou desdits nœuds.

Pour les interactions du robot avec les obstacles de l'environnement extérieur, on peut utiliser différents types de contraintes tels que décrit dans les articles comme « Interactive simulation of flexible needle insertions based on constraint models » mentionné ci-dessus pour simuler l'insertion du robot dans un milieu déformable, ou I. Peterlik, M. Nouicer, C. Duriez, S. Cotin, and A. Kheddar, « Constraintbased haptic rendering of multirate compliant mechanisms », EEE Trans.Haptics, vol. 4, no. 3, pp. 175-187, Jul. 2011, http://dx.doiorg/10.1109/TOH.2011.41) pour un formalisme plus générique, y compris en réponse à une collision.

Pour un obstacle, comme indiqué ci-dessus, chaque ligne relative à l'obstacle du vecteur $\delta$ correspond à un degré de liberté possiblement supprimé par l'obstacle.

Par exemple, dans le cas d'un contact point / plan, la valeur indiquée dans $\delta$ pour cette ligne mesure la distance du point au plan : si cette valeur de $\delta$ est positive la contrainte est désactivée, si la valeur devient négative, la contrainte est activée pour ramener à une valeur égale à 0.

De même, pour un obstacle, chaque ligne correspondante de la matrice J correspond au mouvement du ou des degré(s) de liberté possiblement supprimé(s) par l'obstacle en fonction du mouvement des nœuds.

Pour le même exemple du contact point / plan, pour construire la ligne considérée de J, on va s'appuyer sur 2 informations :

- l'interpolation du mouvement du point P: (par exemple) $P = \alpha.N_a + \beta.N_b + \gamma.N_c$ où $N_a, N_b$ et $N_c$ sont les positions respectives de trois des N nœuds, et $\alpha$, $\beta$ et $\gamma$ sont les poids de l'interpolation avec la norme de $\alpha$, $\beta$ et $\gamma$ compris entre 0 et 1 et la somme de $\alpha$, $\beta$ et $\gamma$ est égale à 1

$$n = \begin{bmatrix} n_x \\ n_y \\ n_z \end{bmatrix}$$

- la direction normale au plan indiquée par le vecteur n unitaire :

Alors la ligne correspondante de J = [ 0 0 ... 0 $\alpha^* n_x$ $\alpha^* n_y$ $\alpha^* n_z$ 0 0 .... 0 $\beta^* n_x$ $\beta^* n_y$ $\beta^* n_z$ 0 0 ..... 0 $\gamma^* n_x$ $\gamma^* n_y$ $\gamma^* n_z$ 0 0 ... 0], où $\alpha^* n_x$ respectivement $\alpha^* n_y$ respectivement $\alpha^* n_z$ est le terme de la ligne considérée, en la colonne relative à l'axe X, respectivement Y, respectivement Z du nœud considéré de position $N_a$ ; $\beta^* n_x$, respectivement $\beta^* n_y$, respectivement $\beta^* n_z$ est le terme en la colonne relative à l'axe X, respectivement Y, respectivement Z du nœud considéré de position $N_b$ et $z^* n_x$, $z^* n_y$ $z^* n_z$ est le terme en la colonne relative à l'axe X, respectivement Y, respectivement Z du nœud considéré de position $N_c$

Quelle que soit la méthode de détermination, la matrice jacobienne J une fois construite, est largement remplie de valeurs nulles. On peut donc la stocker en utilisant un format de matrice creuse.

Pour tenir compte des grandes transformations du robot déformable, engendrées par les commandes, le modèle à éléments finis utilisé est non-linéaire.

En revanche, une linéarisation de ce modèle est effectuée à chaque itération i, qui permet le calcul d'une matrice tangente K(x)= df/dx.

Si on utilise un modèle à éléments finis dynamique, on utilisera une méthode d'intégration implicite ou semi-implicite qui nécessite le calcul de la matrice tangente du modèle non-linéaire.

Dans le cas considéré, un modèle à éléments finis statique est utilisé, qui calcule le vecteur f des forces internes en fonction du vecteur de position x des nœuds.

Dans une étape 102, les valeurs de la matrice tangente K de raideur, définissant les forces internes en chaque nœud en fonction des positions des N nœuds, sont remises à jour en fonction des d positions $x_{i-1}$ courantes déterminées de ces N nœuds.

La matrice K ainsi mise à jour est notée $K(x_{1-1})$.

Dans le cas considéré, la taille de K est 3N*3N.

On calcule alors une linéarisation des forces internes sur la base de la position $x_{i-1}$ des nœuds :

$$f(x_i) \approx f(x_{i-1}) + K(x_{i-1}).\, \Delta x \qquad \text{équation (2)}$$

avec $\Delta x = x_i - x_{i-1}$.

Pour établir l'équilibre statique (la somme des forces externes et internes au robot 1 est égale à zéro sur l'ensemble des nœuds) à l'itération i courante, on aboutit à l'équation :

$$- K(x_{i-1}).\, \Delta x = p + f(x_{i-1}) + J^T \lambda \qquad \text{équation (3)}$$

où le vecteur p représente les forces externes connues, comprenant par exemple la gravité, et $J^T \lambda$ rassemble les contributions de toutes les contraintes prises en compte selon l'invention (i.e. celles relatives aux points effecteurs, actionneurs et interactions mécaniques avec l'environnement extérieur).

La matrice J est celle calculée à l'étape 101 et les valeurs courantes du vecteur $\lambda$ sont à déterminer.

On calcule alors la configuration libre du robot 1, correspondant à la résolution de l'équation 3 du modèle du robot avec le vecteur $\lambda$ égal au vecteur nul.

La position correspondante ainsi déterminée est $X_{free} = x_{i-1} + \Delta x_{free}$.

La matrice K est très creuse. Pour résoudre le système formé par cette matrice, on peut utiliser un gradient conjugué et une méthode directe avec factorisation, par exemple de type $LDL^T$.

Par exemple, pour un maillage du robot 1 composé de 1000 nœuds et de 3000 éléments tétraédriques, il est possible d'obtenir un taux de rafraîchissement de 60 Hz, ce qui est compatible avec la commande en temps réel d'un robot.

Pour utiliser des maillages plus complexes, la factorisation $LDL^T$ peut être désynchronisée et la technique dite de « warping » peut être utilisée (cf. par exemple H. Courtecuisse, J. Allard, C. Duriez, and S. Cotin, « Preconditioner-based contact response and application to cataract surgery », Medical Image, Computing and Computer-Assisted Intervention (MICCAI), 2011, http://www.lifl.fr/~courtecu/).

A partir de cette position résultante $X_{free}$ (qui correspondrait à l'absence d'actionnement et d'obstacle) et de l'équation 1, on détermine la valeur du vecteur $\delta_{free} = \delta(x_{free}) = J.\, \Delta x_{free}$.

Dans cette étape 102, les valeurs de la matrice K sont actualisées en fonction de la position courante des nœuds du robot et du modèle de déformation choisi : modèle FEM ou autre modèle basé sur la physique. En effet, si un modèle dynamique et un schéma d'intégration temporelle implicite ont été choisis, K contient aussi une linéarisation des forces inertielles dans une somme pondérée avec la linéarisation des forces internes: la pondération dépend alors du schéma d'intégration et du pas de temps choisi. Dans tous les cas, on suppose que l'on utilise une unique valeur de K par pas de calcul de la commande.

Dans une étape 103, on calcule une matrice W, dite de compliance réduite, qui permet de travailler dans un espace de dimension réduite, avec $W = J.K^{-1} \cdot J^T$, où J est la matrice déterminée à l'étape 101, $J^T$ est sa matrice transposée et $K^{-1}$ est l'inverse de la matrice K obtenue à l'étape 102.

A partir du calcul de la configuration libre telle que décrite ci-dessus, on obtient une nouvelle formulation décrivant la variation du vecteur $\delta$ :

$$\delta = W . \lambda + \delta_{\text{free}} \qquad \text{équation (4).}$$

La mise en forme de la détermination des commandes du robot 1 sous la forme de l'équation (4) montre que la taille du système à résoudre correspond à la taille de la matrice W, qui est égale à M, la taille du vecteur $\delta$, c'est-à-dire à l'addition du nombre de degrés de liberté des points effecteurs, des actionneurs et des obstacles. Autrement dit, pour un robot commandé en position sur deux points effecteurs (correspondant au total à 6 degrés de liberté), par 10 actionneurs (correspondant au total à 10 degrés de liberté) avec 5 points de contact (correspondant au total à 5 degrés de liberté), on arrive à un système de taille 21. Alors que dans l'art antérieur, les tailles des systèmes à résoudre correspondent à la taille du vecteur x, soit au nombre N de nœuds utilisés par le modèle à éléments finis multiplié par le nombre de degrés de liberté par nœud, ce qui pour des maillages de taille moyenne, utilisables en temps réel, correspond à des systèmes de taille située entre 1000 et 3000.

Pour permettre un calcul efficace de l'inverse de K, certaines méthodes de factorisation peuvent être utilisées en temps réel pour les maillages de taille réduite (environ 300 nœuds à 3 degrés de liberté). Pour les structures de robot linéiques et dont la matrice K peut se mettre sous la forme d'une matrice bloc tri-diagonale, le calcul peut se faire avec un solveur dédié comme dans C. Duriez, S. Cotin, J. Lenoir, and P. F. Neumann, « New approaches to catheter navigation for interventional radiology simulation », Computer Aided Surgery, vol. 11, pp. 300-308, 2006. De façon générale, on peut utiliser une très bonne approximation de la matrice W en utilisant la méthode décrite dans l'article mentionné ci-dessus « Preconditioner-based contact response and application to cataract surgery », qui s'appuie sur un algorithme adapté à une unité de traitement graphique GPU (« Graphic Processor Unit » en anglais).

En utilisant la matrice de compliance $W = [w_{rj}]_{r,j}$, on peut connaître le couplage mécanique entre un point effecteur r et un point actionneur j de la structure. Plus précisément, on peut avoir une estimation du déplacement $\Delta\delta_r$ créé sur un point effecteur r sur un degré de liberté (correspondant à une variation de la différence entre la position actuelle du point effecteur et sa position désirée sur ce degré de liberté), stockée sur la ligne r de la matrice J) en fonction de l'effort $\lambda_j$ (force, pression ou couple) appliquée par l'actionneur j, sur la structure et dont la direction de la contrainte est stockée sur la ligne j de la matrice J : on obtient : $\Delta\delta_r = w_{rj} \lambda_j$.

Pour simplifier, on nomme ci-après ce point effecteur associé à la ligne r de la matrice J « effecteur r » et cet actionneur associé à la ligne j de la matrice J « l'actionneur j».

Le lien cinématique entre la position de l'actionneur j et la position de l'effecteur r est fourni par $\Delta\delta_r = \Delta\delta_j . w_{rj} / w_{jj}$, où $\Delta\delta_j$ est une variation de position de l'actionneur j (dans la direction d'actionnement) et $\Delta\delta_r$ est une variation de position de l'effecteur r. Si l'effecteur a plusieurs degrés de liberté, $\Delta\delta_r$ et $w_{rj}$ ont autant de lignes que de degrés de liberté.

Un autre actionneur, associé à la ligne k de la matrice J et nommé ci-après « l'actionneur k » peut aussi influencer le déplacement de l'actionneur j, et vice-versa.

Ce couplage mécanique peut aussi être connu à l'aide de la matrice W : la variation de déplacement correspondante, sur le degré de liberté de l'actionneur j, est $\Delta\delta_j = W_{jk} \lambda_k = \Delta\delta_k . W_{jk} / W_{kk}$.

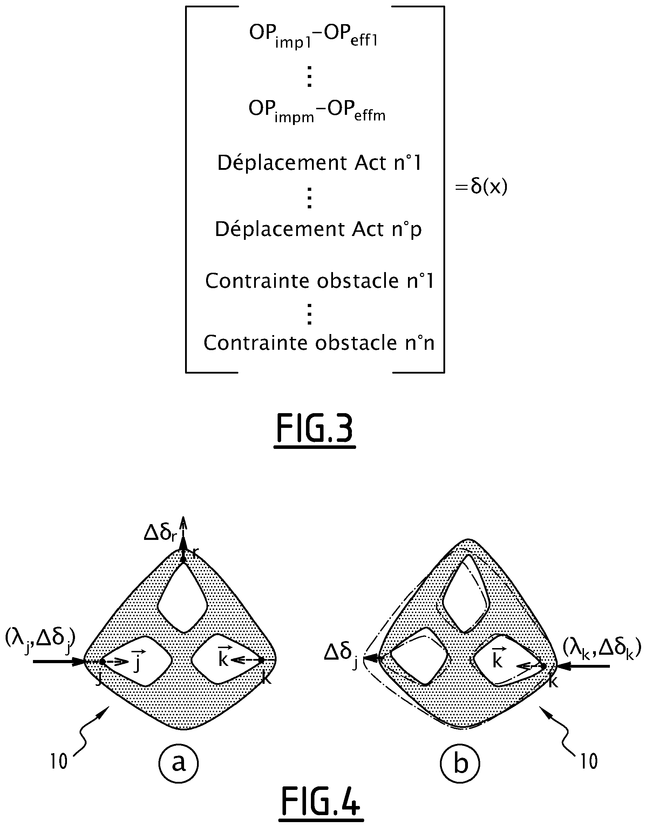

Les figures 4a et 4b illustrent ces liens cinématiques, et représentent la manière dont un actionnement ($\lambda_j$, $\delta_j$) de l'actionneur j le long de la direction $\vec{j}$ peut être commandé de manière à imposer un déplacement $\Delta\delta_r$ sur l'effecteur terminal r (figure 4a). Un autre actionnement ($\lambda_k$, $\delta_k$) de l'actionneur k le long de la direction $\vec{k}$ peut créer un déplacement non souhaité $\Delta\delta_j$ sur l'actionneur j (figure 4b).

Dans une étape 104, les commandes d'actionnement vont être déterminées en fonction de la matrice W, de la connaissance de la position $x_{i-1}$ des points effecteurs et de leur trajectoire désirée à l'issue de l'itération i, de la position des actionneurs et de l'ensemble des contraintes liées à l'environnement.

Etant considérés les termes $\delta_r(x_i)$ des $r^{\text{èmes}}$ lignes du vecteur $\delta$ relatives aux points effecteurs (r dans l'exemple considéré étant égal à 3*m=3*2), indiquant les distances entre leurs positions réelle et désirée selon les différentes directions X, Y, Z de l'espace, le but de l'algorithme détaillé ci-dessous est d'identifier une position (correspondant à un effort d'actionnement) sur les actionneurs (stockée sur les lignes de $\delta$ pour la position d'actionnement et sur les lignes de $\lambda$ pour l'effort d'actionnement) telle que le robot se déforme de manière à arriver à $\delta_r(x_i)=0$.

Parmi les algorithmes utilisables pour effectuer ce calcul, un solveur itératif de type Gauss-Seidel est ici choisi. Les itérations de cet algorithme sont stoppées une fois que la solution se stabilise, la variation entre deux itérations de la solution déterminée devenant alors inférieure à un seuil fixé.

A chaque itération « it », l'algorithme met à jour, une par une, les contributions $\lambda_j$ des actionneurs j, tout en gelant les contributions $\lambda_k$ des autres actionneurs à leur valeur actuelle, pour tenir compte du couplage entre les actionneurs, sur la base de cette équation :

$$\delta_j - w_{jj}\lambda_j^{it} = \sum_{k=0}^{j-1} w_{jk}\lambda_k^{it} + \sum_{k=j+1}^{p} w_{jk}\lambda_k^{it-1} + \delta_{free,j} \qquad \text{équation (5)}$$

où $\delta_j$ est le terme de la ligne du vecteur $\delta$ relatif à l'actionneur j, $\lambda_k^{it}$ est le terme de la ligne du vecteur $\lambda$ relatif à l'actionneur k tel que déterminé à l'itération it-1, p est le nombre d'actionneurs, $\delta_{free,j}$ est le terme de la ligne du vecteur $\delta_{free}$ relatif à l'actionneur j.

Comme un algorithme de type Gauss-Seidel est utilisé, lorsqu'on effectue une mise à jour locale de l'actionneur j, les contributions gelées des actions 0,..., j-1 viennent de l'itération courante it alors que les contributions gelées des actionneurs j,..., p, viennent de l'itération précédente it-1. La mise à jour locale de l'actionneur j donne une nouvelle contribution $\lambda_j^{it}$ , et une nouvelle position du point effecteur $\delta_r$ selon la direction r, est mise à jour en utilisant :

$$\delta_r += w_{rj}(\lambda_j^{it} - \lambda_j^{it-1}) = w_{rj}\Delta\lambda_j \qquad ,$$

où $\Delta\lambda_j$ représente la variation de l'effort $\lambda_j$ exercé par l'actionneur j suite à la mise à jour locale de l'actionneur j.

Ainsi durant la mise à jour de l'actionneur j, on peut évaluer comment l'actionneur peut ou non réduire la valeur de $\delta$.

Lorsqu'on effectue cette mise à jour en 3D, r est pris successivement égal à X, Y, Z pour un point effecteur considéré, donnant ainsi successivement les valeurs $\delta_X$, $\delta_Y$, $\delta_Z$.

En imposant la variation de $\lambda_j$, un mouvement est créé sur ce point effecteur :

$$\begin{bmatrix} \delta_X \\ \delta_Y \\ \delta_Z \end{bmatrix} += \begin{bmatrix} w_{Xj} \\ w_{Yj} \\ w_{Zj} \end{bmatrix} \Delta\lambda_j$$

où $w_{Xj}$, respectivement $w_{Yj}$, respectivement $w_{Zj}$ sont les termes de la matrice W à la ligne associée au point effecteur considéré pour la direction X, respectivement Y, respectivement Z et à la colonne associée à l'actionneur j.

On appelle $\delta^*$ le vecteur $\begin{bmatrix} \delta_X \\ \delta_Y \\ \delta_Z \end{bmatrix}$, et on appelle $w^*$ le vecteur $\begin{bmatrix} w_{Xj} \\ w_{Yj} \\ w_{Zj} \end{bmatrix}$.

A chaque itération it et à chaque passage sur un actionneur j, on cherche donc à réduire la distance entre la position actuelle et la positon désirée pour le point effecteur considérée, mesurée par $\delta^*$. Mais l'actionneur j ne crée de mouvement sur le point effecteur que dans la direction donnée par le vecteur $w^*$.

Par conséquent, on cherche une nouvelle valeur de $\Delta\lambda_j$ telle que :

$$(w_{*j}\Delta\lambda_j).(\frac{w_{*j}}{\|w_{*j}\|}) = -\delta_*.(\frac{w_{*j}}{\|w_{*j}\|})$$

Cette valeur est obtenue en utilisant :

$$\Delta \lambda_j = -(w_{Xj}\Delta \delta_x + w_{Yj}\Delta \delta_Y + w_{Zj}\Delta \delta_Z)/\left\| w_{*j} \right\|^2 \qquad \text{équation (6)}$$

où $\Delta \delta_x$, $\Delta \delta_Y$ et $\Delta \delta_Z$ représentent respectivement la variation de $\delta_X$, $\delta_Y$ et $\delta_Z$.

L'équation 6 permet de déterminer la variation de l'effort exercé par un actionneur afin de corriger au mieux l'écart entre positions réelle et désirée d'un point effecteur.

Etant donné cette nouvelle valeur de $\Delta \lambda_j$, on peut mettre à jour $\lambda_j^{it}$ et la position $\delta_j$ de l'actionneur j en utilisant l'équation (5).

Si la position mise à jour de l'actionneur j dépasse une butée qu'on a associée à l'actionneur j ou si la valeur $\lambda_j$ de l'effort d'actionnement de l'actionneur j dépasse les capacités de l'actionneur, on limite alors l'actionnement pour respecter ces contraintes.

On a décrit ci-dessus la prise en compte des contraintes liées aux actionneurs. Pour prendre en compte des auto-collisions du robot, des contacts ou autres contraintes avec l'environnement, il suffit pour cela d'ajouter une ligne dans le système considéré pour chaque contrainte supplémentaire. A chaque itération it, une fois qu'on aura mis à jour les contraintes liées aux actionneurs, on met à jour les lignes correspondantes à ces autres contraintes. Pour une contrainte de contact, on impose par exemple la loi de Signorini : sur un contact j, on calcule d'abord $\delta_j^{it}$ en utilisant l'équation (5). Ensuite, on calcule $\Delta \lambda_j = - \delta_j^{it}/w_{jj}$. Puis, si et seulement si $\lambda_j^{it} < 0$, on renforce la contrainte unilatérale en imposant $\lambda_j^{it} = 0$. D'autres types de contrainte, par exemple l'insertion d'aiguille, peuvent être calculées avec d'autres types d'équations (cf. notamment le document « Interactive simulation of flexible needle insertions based on constraint models » déjà cité).

Une fois que l'algorithme a convergé, on obtient un vecteur λ qui donne les contributions à réaliser par les actionneurs prenant en compte les contraintes d'obstacles, et le vecteur δ correspondant.

L'algorithme de Gauss-Seidel permettant de faire un contrôle avec actionnement redondant n'est qu'un des algorithmes utilisables. D'autres algorithmes peuvent être utilisés de manière à déterminer un effort/une pression à appliquer sur les actionneurs pour obtenir la trajectoire désirée des points effecteurs.

Dans une étape 105, les commandes indiquant les contributions à fournir par les actionneurs sont fournies à ces derniers, les actionneurs mettant alors en œuvre leur commande respective. Si l'actionneur est commandé en position, la commande est fonction de la valeur en chaque ligne de δ associée à l'actionneur. Si l'actionneur est commandé en effort, la commande est fonction de la valeur en chaque ligne de λ associée à l'actionneur.

Les coordonnées des N nœuds du robot 1 dans la configuration résultant de ces actionnements sont alors déterminées, par exemple par mesures, puis stockées dans le vecteur $x_i$.

Dans un autre mode de réalisation, les coordonnées des N nœuds du robot 1 dans la configuration résultant de ces actionnements sont déterminées à l'aide de :

$$x_i = x_{free} + K^{-1}J^{\top}\lambda.$$

La présente invention permet ainsi en temps réel le contrôle d'un robot déformable par un ensemble d'actionneur(s) permettant d'obtenir une trajectoire désirée d'au moins un effecteur terminal du robot, grâce notamment à l'utilisation d'une méthode à éléments finis et ce, même lorsque cet ensemble d'actionneurs comporte un très grand nombre d'actionneurs.

Dans un mode de réalisation, on regroupe dans la matrice de compliance les lignes relatives aux zones d'actionnement compatibles (i.e. qui créent des déplacements similaires sur un effecteur terminal) pour simplifier le calcul du contrôle en temps réel.

Dans le cas considéré, la détermination des commandes prenait en compte la présence d'obstacles présents autour du robot. Néanmoins, l'invention peut être mise en œuvre sans prise en compte d'obstacles. Dans ce cas, les matrices et vecteurs considérés ne comportent pas de lignes relatives aux obstacles.

Dans le cas considéré, le robot déformable comportait une structure en 3 dimensions (3D) déformable. Néanmoins, l'invention est applicable pour toute géométrie 1D, 2D ou 3D de robot déformable selon un nombre quelconque de dimensions. Par exemple, le robot peut correspondre à une structure en 1D, par exemple de type tube flexible actionné ou une structure 2D, par exemple une coque de faible épaisseur actionnée.

On notera que dans l'équation (4), on utilise $\delta_{free}$ comme valeur de référence pour le vecteur. Dans d'autres modes de réalisation, on pourrait prendre en compte les vecteurs $\delta$ et $\lambda$ calculés à l'itération précédente et déterminer de façon prédictive les valeurs de ces vecteurs pour l'itération courante à l'aide des équations 3 et 4, comme cela est présenté aux sections 3.2 et 3.4 de l'article Peterlik, I.; Nouicer, M.; Duriez, C.; Cotin, S. & Kheddar, « A. Constraint-Based Haptic Rendering of Multirate Compliant » Mechanisms IEEE Trans. Haptics, IEEE Computer Society Press, 2011, 4, 175-187.

Ainsi suivant l'invention, tout type de contrainte peut être prise en compte, extérieure (obstacles...), ou intérieure au robot (butée des actionneurs par exemple, une rigidification locale, ou au contraire, un assouplissement de certaines parties de la structure qui peuvent être constituées d'un matériau dont les propriétés mécaniques sont contrôlables), des contacts internes (actifs: un actionneur vient créer un contact entre deux parties de la structure, ou passif: la déformation créée des contacts internes à la structure) peuvent être utilisés pour optimiser l'efficacité de la structure. C'est le calcul de la matrice de compliance réduite selon l'invention, intégrant des lignes relatives à ces contraintes qui permet de piloter la modification du comportement de la structure.

Le modèle d'interaction mécanique entre un obstacle 4 et le robot 1 est utilisé pour la construction du vecteur $\delta$ (et donc en conséquence, pour la matrice J et la matrice W). Il est aussi utilisé dans l'algorithme qui calcule les positions du robot dans l'étape 105.

Les applications de l'invention sont très larges et le spectre d'utilisation englobe notamment celui de la robotique, par exemple dans les domaines suivants.

- Robotique chirurgicale ou en milieu fragile : un robot flexible présente plusieurs avantages. Il peut tout d'abord être réalisé «d'un seul bloc», ce qui évite l'utilisation de matériau non compatible avec l'imagerie. En outre, en chirurgie, une des contraintes est que le robot ne doit pas blesser le patient : il est donc intéressant d'avoir un robot étant capable de se déformer lorsqu'il entre en contact avec l'anatomie du patient.
- Robotique médicale : pour la création d'orthèse fonctionnelle (cyberthèse), il est avantageux de ne pas avoir un exosquelette rigide de robot, particulièrement inconfortable car la cinématique des articulations est difficile à suivre pour des orthèses articulées. L'approche proposée permet d'utiliser des exosquelettes flexibles qui s'adaptent à la morphologie du patient et qui optimisent l'actionnement suivant l'anatomie et la situation.
- Exosquelettes : pour les mêmes raisons que celles évoquées ci-dessus, il peut être avantageux d'utiliser un exosquelette flexible.
- Robotique biomimétique : pour la création de robots proches de l'anatomie humaine ou animale, il est intéressant de pouvoir piloter des structures déformables pour mimer le rôle des muscles.

Dans un mode de réalisation, le robot peut comporter au moins une partie rigide et au moins une partie déformable : par exemple, le robot peut comporter un bras rigide et une aiguille flexible tenue par le bras rigide, le robot devant insérer l'aiguille dans des tissus mous.

**Revendications**

1. Procédé de commande d'un robot (1) comportant au moins une partie déformable par un ensemble d'actionneur(s) (2) mis en œuvre par ordinateur, chaque point d'un ensemble de point(s) (3), dit(s) point(s) effecteur(s), du robot, devant suivre une trajectoire déterminée, le robot étant défini par un modèle de nœuds et une matrice K définissant une variation des forces internes du robot en chaque nœud en fonction de la variation de position des nœuds, le procédé étant **caractérisé en ce que**, pour déterminer la commande destinée à chaque actionneur lors d'un $i^{ème}$ pas de calcul de commande :

   i/ on actualise les valeurs de la matrice K en fonction de la position courante des nœuds du robot ;
   ii/ on détermine les valeurs courantes de la matrice jacobienne J d'un vecteur $\delta$ (x), où x est un vecteur de position des nœuds et le vecteur $\delta$ (x) relatif au déplacement de chaque actionneur commandé en vue d'un mouvement du robot (1) et comporte au moins un sous-ensemble de ligne(s) relatif à chaque point effecteur et indiquant les coordonnées des écarts entre la position dudit point effecteur et sa trajectoire déterminée, et au moins un sous-ensemble de ligne(s) indiquant le déplacement de chaque actionneur, on détermine $\Delta x$ vérifiant :
   $- K . \Delta x = p + f(x_{i-1})$, où $\Delta x$ représente une variation du vecteur x, le vecteur p représente les forces externes s'exerçant sur le robot, K est la matrice actualisée à l'étape i/, $x_{i-1}$ est le vecteur de position courante des nœuds et $f(x_{i-1})$ est le vecteur des forces internes s'exerçant sur le robot dans sa position courante, on calcule $X_{free} = x_{i-1} + \Delta x$ ainsi que les valeurs du vecteur $\delta$ ($x_{free}$);
   iii/ on calcule les valeurs de la matrice $W = J . K^{-1} . J^T$, où $K^{-1}$ est la matrice inverse de K et $J^T$ est la matrice transposée de J ; et
   iv/ on résout l'équation $\delta = W . \lambda + \delta_0$, pour déterminer les valeurs des vecteurs $\delta$ et $\lambda$ audit $i^{ème}$ pas de calcul,

où $\lambda$ est un vecteur comportant, pour chaque ligne du vecteur $\delta$ relative à un point effecteur, une ligne comportant une valeur nulle et pour chaque ligne du vecteur $\delta$ relative à un actionneur, une ligne comportant une valeur d'effort exercé par l'actionneur correspondant au déplacement indiqué, et $\delta_0$ est un vecteur égal à $\delta(x_{free})$ ; et
v/ on déduit la commande destinée à chaque actionneur en fonction au moins de valeurs déterminées à l'étape iv/ du vecteur $\delta$ ou $\lambda$.

2. Procédé de commande d'un robot (1) selon la revendication 1, selon lequel le vecteur $\delta$ comporte en outre au moins un sous-ensemble de ligne(s) indiquant un déplacement d'un point (4) du robot soumis à des contraintes extérieures au robot, et le vecteur $\lambda$ comporte en outre un sous-ensemble correspondant de ligne(s) indiquant des valeurs de forces exercées par les contraintes extérieures au robot correspondant au déplacement indiqué.

3. Procédé de commande d'un robot (1) selon la revendication 1 ou 2, selon lequel la position correspondant à la trajectoire déterminée d'un point effecteur est soustraite à la position du point effecteur déterminée par interpolation, associée à des coefficients d'interpolation respectifs, de la position d'un ensemble desdits nœud(s) pour obtenir le sous-ensemble de lignes du vecteur $\delta(x)$ relatives à l'effecteur, et selon lequel, dans ledit même sous-ensemble de lignes de la matrice jacobienne J, les valeurs dans les colonnes qui correspondent auxdits nœuds, sont fonction desdits coefficients d'interpolation.

4. Procédé de commande d'un robot (1) selon l'une des revendications précédentes, selon lequel un point de fixation d'un actionneur (2) est une interpolation de nœud(s) associé(s) chacun à un coefficient d'interpolation non nul, et au moins une ligne de la matrice J est déterminée en fonction d'une direction d'actionnement de l'actionneur, chaque terme de ladite ligne étant nul à l'exception de ceux sur les colonnes dudit nœud ou desdits nœuds.

5. Procédé de commande d'un robot (1) selon l'une quelconque des revendications précédentes, selon lequel à l'étape iii/, l'équation $\delta = W. \lambda + \delta_0$ est résolue par un algorithme itératif de type Gauss-Seidel, intégrant les contraintes liées aux directions d'actionnement, aux limites de butée et/ou à un effort maximum exercé par au moins un actionneur, et/ou des caractéristiques de contraintes extérieures au robot.

6. Programme d'ordinateur pour commander un robot (1) comportant au moins une partie déformable par un ensemble d'actionneur(s) (2), chaque point d'un ensemble de point(s) (3), dit(s) point(s) effecteur(s) du robot, devant suivre une trajectoire déterminée, le robot étant défini par un modèle de nœuds et une matrice K définissant une variation des forces internes du robot en chaque nœud en fonction de la variation de position des nœuds, ledit programme comportant des instructions pour mettre en œuvre les étapes d'un procédé selon l'une des revendications 1 à 6 lors d'une exécution du programme par des moyens de traitement, pour déterminer la commande destinée à chaque actionneur lors d'un $i^{ème}$ pas de calcul de commande.

7. Module de commande d'un robot (1) comportant au moins une partie déformable par un ensemble d'actionneur(s) (2), chaque point d'un ensemble de point(s) (3), dit(s) point(s) effecteur(s), du robot, devant suivre une trajectoire déterminée, le robot étant défini par un modèle de nœuds et une matrice K définissant une variation des forces internes du robot en chaque nœud en fonction de la variation de position des nœuds, le module de commande étant **caractérisé en ce qu'**il est adapté pour, lors de la détermination de la commande destinée à chaque actionneur lors d'un $i^{ème}$ pas de calcul de commande, actualiser les valeurs de la matrice K en fonction de la position courante des nœuds du robot, puis pour déterminer les valeurs courantes de la matrice jacobienne J d'un vecteur $\delta(x)$, où x est un vecteur de position des nœuds et le vecteur $\delta(x)$ relatif au déplacement de chaque actionneur commandé en vue d'un mouvement du robot (1) et comporte au moins un sous-ensemble de ligne(s) relatif à chaque point effecteur et indiquant les coordonnées des écarts entre la position dudit point effecteur et sa trajectoire déterminée, et au moins un sous-ensemble de ligne(s) indiquant le déplacement de chaque actionneur, pour déterminer $\Delta x$ vérifiant : $- K. \Delta x = p + f(x_{i-1})$, où $\Delta x$ représente une variation du vecteur x, le vecteur p représente les forces externes s'exerçant sur le robot, K est la matrice actualisée, $x_{i-1}$ est le vecteur de position courante des nœuds et $f(x_{i-1})$ est le vecteur des forces internes s'exerçant sur le robot dans sa position courante, pour calculer $X_{free} = x_{i-1} + \Delta x$, puis pour calculer les valeurs du vecteur $\delta(x_{free})$ ;
ledit module de commande étant adapté pour calculer les valeurs de la matrice $W = J. K^{-1}. J^T$, où $K^{-1}$ est la matrice inverse de K et $J^T$ est la matrice transposée de J et pour résoudre l'équation $\delta = W. \lambda + \delta_0$, en déterminant les valeurs des vecteurs $\delta$ et $\lambda$ audit $i^{ème}$ pas de calcul, où $\lambda$ est un vecteur comportant, pour chaque ligne du vecteur $\delta$ relative à un point effecteur, une ligne comportant une valeur nulle et pour chaque ligne du vecteur $\delta$ relative à un actionneur, une ligne comportant une valeur d'effort exercé par l'actionneur correspondant au déplacement indiqué, et $\delta_0$ est égal à $\delta(x_{free})$ ; et
ledit module de commande étant adapté pour déduire la commande destinée à chaque actionneur en fonction d'au moins desdites valeurs déterminées du vecteur δ ou λ.

**8.** Module de commande d'un robot (1) selon la revendication 7 adapté pour déterminer un vecteur δ comportant en outre au moins un sous-ensemble de ligne(s) indiquant un déplacement d'un point (4) du robot soumis à des contraintes extérieures au robot, et un vecteur λ comportant en outre un sous-ensemble correspondant de ligne(s) indiquant des valeurs de forces exercées par les contraintes extérieures au robot correspondant au déplacement indiqué.

**9.** Module de commande d'un robot (1) selon la revendication 7 ou 8, adapté pour soustraire la position correspondant à la trajectoire déterminée d'un point effecteur à la position du point effecteur déterminée par interpolation, associée à des coefficients d'interpolation respectifs, de la position d'un ensemble desdits nœud(s) pour obtenir le sous-ensemble de lignes du vecteur δ(x) relatives à l'effecteur, et adapté pour déterminer, dans ledit même sous-ensemble de lignes de la matrice jacobienne J, les valeurs dans les colonnes qui correspondent auxdits nœuds, en fonction desdits coefficients d'interpolation.

**10.** Module de commande d'un robot (1) selon l'une des revendications 7 à 9, adapté pour déterminer un point de fixation d'un actionneur (2) en tant qu'une interpolation de nœud(s) associé(s) chacun à un coefficient d'interpolation non nul, et pour déterminer au moins une ligne de la matrice J en fonction d'une direction d'actionnement dudit actionneur, chaque terme de ladite ligne étant nul à l'exception de ceux sur les colonnes dudit nœud ou desdits nœuds.

**11.** Module de commande d'un robot (1) selon l'une quelconque des revendications 7 à 10, adapté pour résoudre l'équation δ = W. λ + δ₀ par un algorithme itératif de type Gauss-Seidel, en y intégrant les contraintes liées aux directions d'actionnement, aux limites de butée et/ou à un effort maximum d'au moins un actionneur, et/ou des caractéristiques de contraintes extérieures au robot.

**Patentansprüche**

**1.** Verfahren zur Steuerung eines Roboters (1), der mindestens einen von einer Aktuatoranordnung (2) verformbaren Teil aufweist, das von einem Rechner durchgeführt wird, wobei jeder Punkt einer Punkt(e)anordnung (3), bezeichnet als Effektorpunkt(e) des Roboters, einen bestimmten Weg verfolgen muss, wobei der Roboter durch ein Knotenmodell und eine Matrix K definiert ist, die eine Variation der internen Kräfte des Roboters an jedem Knoten in Abhängigkeit von der Positionsvariation der Knoten definiert, wobei das Verfahren **dadurch gekennzeichnet ist, dass** zum Bestimmen der Steuerung, die für jeden Aktuator bei einem i-ten Steuerungsberechnungsschritt vorgesehen ist:

i/ die Werte der Matrix K in Abhängigkeit von der laufenden Position der Knoten des Roboters aktualisiert werden;
ii/ die laufenden Werte der Jacobi-Matrix J eines Vektors δ(x) bestimmt werden, wobei x ein Positionsvektor der Knoten ist und der Vektor δ(x) relativ zur Verlagerung jedes im Hinblick auf eine Bewegung des Roboters (1) gesteuerten Aktuators und mindestens eine Unteranordnung einer Linie/von Linien relativ zu jedem Effektorpunkt aufweist und die Koordinaten der Abweichungen zwischen der Position des Effektorpunkts und seinem bestimmten Weg angibt, und mindestens eine Unteranordnung einer Linie/von Linien, die die Verlagerung jedes Aktuators angibt, Δx bestimmt wird, erfüllend: - K. Δx = p + f (x$_{i-1}$), wobei Δx eine Variation des Vektors x darstellt, der Vektor p die externen, auf den Roboter wirkenden Kräfte darstellt, K die in Schritt i/ aktualisierte Matrix ist, x$_{i-1}$ der Vektor einer laufenden Position der Knoten ist und f(x$_{i-1}$) der Vektor der internen, auf den Roboter wirkenden Kräfte in seiner laufenden Position ist, X$_{free}$ = x$_{i-1}$ + Δx berechnet wird sowie die Werte des Vektors δ (x$_{free}$);
iii/ die Werte der Matrix W = J . K$^{-1}$ . J$^T$ berechnet werden, wobei K$^{-1}$ die inverse Matrix von K und J$^T$ die transponierte Matrix von J ist; und
iv/ die Gleichung δ = W. λ + δ₀ gelöst wird, um die Werte der Vektoren δ und A beim i-ten Berechnungsschritt zu bestimmen, wobei λ ein Vektor ist, der für jede Linie des Vektors δ relativ zu einem Effektorpunkt eine Linie aufweist, die einen Null-Wert aufweist, und für jede Linie des Vektors δ relativ zu einem Aktuator eine Linie, die einen Wert einer Kraft aufweist, die von dem Aktuator entsprechend der angegebenen Verlagerung ausgeübt wird, und δ₀ ein Vektor gleich δ (x$_{free}$) ist; und
v/ die für jeden Aktuator vorgesehene Steuerung in Abhängigkeit von mindestens Werten abgeleitet wird, die in Schritt iv/ des Vektors δ oder λ bestimmt werden.

2. Verfahren zur Steuerung eines Roboters (1) nach Anspruch 1, wobei der Vektor $\delta$ ferner mindestens eine Unteranordnung einer Linie/von Linien aufweist, die eine Verlagerung eines Punkts (4) des Roboters angibt/angeben, der gegenüber dem Roboter äußeren Beanspruchungen ausgesetzt ist, und der Vektor $\lambda$ ferner eine entsprechende Unteranordnung einer Linie/von Linien aufweist, die Werte von Kräften angibt/angeben, die von den gegenüber dem Roboter äußeren Beanspruchungen entsprechend der angegebenen Verlagerung ausgeübt werden.

3. Verfahren zur Steuerung eines Roboters (1) nach Anspruch 1 oder 2, wobei die Position, die dem bestimmten Weg eines Effektorpunkts entspricht, an der durch Interpolation bestimmten, jeweiligen Interpolationskoeffizienten zugeordneten Position des Effektorpunkts von der Position einer Anordnung des Knotens/der Knoten abgezogen wird, um die Unteranordnung von Linien des Vektors $\delta(x)$ relativ zum Effektor zu erhalten, und wobei in derselben Unteranordnung einer Linie/von Linien der Jacobi-Matrix J die Werte in den Spalten, die den Knoten entsprechen, von den Interpolationskoeffizienten abhängen.

4. Verfahren zur Steuerung eines Roboters (1) nach einem der vorangehenden Ansprüche, wobei ein Fixpunkt eines Aktuators (2) eine Interpolation eines Knotens/von Knoten ist, der/die jeweils einem Interpolationskoeffizienten zugeordnet ist/sind, der nicht Null ist, und mindestens eine Linie der Matrix J in Abhängigkeit von einer Betätigungsrichtung des Aktuators bestimmt wird, wobei jedes Element der Linie Null ist, mit Ausnahme derjenigen in den Spalten des Knotens oder der Knoten.

5. Verfahren zur Steuerung eines Roboters (1) nach einem der vorangehenden Ansprüche, wobei in Schritt iii/ die Gleichung $\delta = W. \lambda + \delta_0$ durch einen iterativen Algorithmus vom Typ Gauss-Seidel gelöst wird, bei Integration der Beanspruchungen in Verbindung mit den Betätigungsrichtungen, mit den Anschlaglimits und/oder mit einer maximalen Kraft, die von mindestens einem Aktuator ausgeübt wird, und/oder der Merkmale von gegenüber dem Roboter äußeren Belastungen.

6. Rechnerprogramm zur Steuerung eines Roboters (1), der mindestens einen von einer Aktuatoranordnung (2) verformbaren Teil aufweist, wobei jeder Punkt einer Punkt(e)anordnung (3), bezeichnet als Effektorpunkt(e) des Roboters, einen bestimmten Weg verfolgen muss, wobei der Roboter durch ein Knotenmodell und eine Matrix K definiert ist, die eine Variation der internen Kräfte des Roboters an jedem Knoten in Abhängigkeit von der Positionsvariation der Knoten definiert, wobei das Programm Befehle aufweist, um die Schritte eines Verfahrens nach einem der Ansprüche 1 bis 6 bei einer Ausführung des Programms durch Verarbeitungsmittel durchzuführen, um die Steuerung zu bestimmen, die für jeden Aktuator bei einem i-ten Steuerungsberechnungsschritt vorgesehen ist.

7. Modul zur Steuerung eines Roboters (1), das mindestens einen von einer Aktuatoranordnung (2) verformbaren Teil aufweist, wobei jeder Punkt einer Punkt(e)anordnung (3), bezeichnet als Effektorpunkt(e) des Roboters, einen bestimmten Weg verfolgen muss, wobei der Roboter durch ein Knotenmodell und eine Matrix K definiert ist, die eine Variation der internen Kräfte des Roboters an jedem Knoten in Abhängigkeit von der Positionsvariation der Knoten definiert, wobei das Steuerungsmodul **dadurch gekennzeichnet ist, dass** es geeignet ist, bei der Bestimmung der Steuerung, die für jeden Aktuator bei einem i-ten Steuerungsberechnungsschritt vorgesehen ist, die Werte der Matrix K in Abhängigkeit von der laufenden Position der Knoten des Roboters zu aktualisieren, dann, um die laufenden Werte der Jacobi-Matrix J eines Vektors $\delta(x)$ zu bestimmen, wobei x ein Positionsvektor der Knoten ist und der Vektor $\delta(x)$ relativ zur Verlagerung jedes im Hinblick auf eine Bewegung des Roboters (1) gesteuerten Aktuators und mindestens eine Unteranordnung einer Linie/von Linien relativ zu jedem Effektorpunkt aufweist und die Koordinaten der Abweichungen zwischen der Position des Effektorpunkts und seines bestimmten Weges angibt, und mindestens eine Unteranordnung einer Linie/von Linien, die die Verlagerung jedes Aktuators angibt/angeben, um $\Delta x$ zu bestimmen, erfüllend: $- K. \Delta x = p + f(x_{i-1})$, wobei $\Delta x$ eine Variation des Vektors x darstellt, der Vektor p die externen, auf den Roboter wirkenden Kräfte darstellt, K die aktualisierte Matrix ist, $x_{i-1}$ der Vektor einer laufenden Position der Knoten ist und $f(x_{i-1})$ der Vektor der internen, auf den Roboter wirkenden Kräfte in seiner laufenden Position ist, um $X_{free} = x_{i-1} + \Delta x$ zu berechnen, dann, um die Werte des Vektors $\delta(x_{free})$ zu berechnen; wobei das Steuerungsmodul geeignet ist, die Werte der Matrix $W = J. K^{-1}. J^T$ zu berechnen, wobei $K^{-1}$ die inverse Matrix von K und $J^T$ die transponierte Matrix von J ist und die Gleichung $\delta = W. \lambda + \delta_0$ zu lösen, durch Bestimmung der Werte der Vektoren $\delta$ und $\lambda$ beim i-ten Berechnungsschritt, wobei $\lambda$ ein Vektor ist, der für jede Linie des Vektors $\delta$ relativ zu einem Effektorpunkt eine Linie aufweist, die einen Null-Wert aufweist, und für jede Linie des Vektors $\delta$ relativ zu einem Aktuator eine Linie, die einen Wert der Kraft aufweist, die von dem Aktuator entsprechend der angegebenen Verlagerung ausgeübt wird, und $\delta_0$ gleich $\delta(x_{free})$ ist; und das Steuerungsmodul geeignet ist, die für jeden Aktuator vorgesehene Steuerung in Abhängigkeit von mindestens den bestimmten Werten des Vektors $\delta$ oder $\lambda$ vorgesehenen Werten abzuleiten.

8. Modul zur Steuerung eines Roboters (1) nach Anspruch 7, das geeignet ist, einen Vektor $\delta$ zu bestimmen, der ferner mindestens eine Unteranordnung einer Linie/von Linien aufweist, die eine Verlagerung eines Punkts (4) des Roboters angibt/angeben, der gegenüber dem Roboter äußeren Beanspruchungen ausgesetzt ist, und einen Vektor A, der ferner eine entsprechende Unteranordnung einer Linie/von Linien aufweist, die Werte von Kräften angibt/angeben, die von den gegenüber dem Roboter äußeren Beanspruchungen entsprechend der angegebenen Verlagerung ausgeübt werden.

9. Modul zur Steuerung eines Roboters (1) nach Anspruch 7 oder 8, das geeignet ist, die Position, die dem bestimmten Weg eines Effektorpunkts entspricht, an der durch Interpolation bestimmten, jeweiligen Interpolationskoeffizienten zugeordneten Position des Effektorpunkts von der Position einer Anordnung des Knotens/der Knoten abzuziehen, um die Unteranordnung von Linien des Vektors $\delta(x)$ relativ zum Effektor zu erhalten, und geeignet, in derselben Unteranordnung einer Linie/von Linien der Jacobi-Matrix J die Werte in den Spalten, die den Knoten entsprechen, in Abhängigkeit von den Interpolationskoeffizienten zu bestimmen.

10. Modul zur Steuerung eines Roboters (1) nach einem der Ansprüche 7 bis 9, das geeignet ist, einen Fixpunkt eines Aktuators (2) als eine Interpolation eines Knotens/von Knoten zu bestimmen, der/die jeweils einem Interpolationskoeffizienten zugeordnet ist/sind, der nicht Null ist, und mindestens eine Linie der Matrix J in Abhängigkeit von einer Betätigungsrichtung des Aktuators zu bestimmen, wobei jedes Element der Linie Null ist, mit Ausnahme derjenigen in den Spalten des Knotens oder der Knoten.

11. Modul zur Steuerung eines Roboters (1) nach einem der Ansprüche 7 bis 10, das geeignet ist, die Gleichung $\delta = W.\ \lambda + \delta_0$ durch einen iterativen Algorithmus vom Typ Gauss-Seidel zu lösen, bei Integration der Beanspruchungen in Verbindung mit den Betätigungsrichtungen, mit den Anschlaglimits und/oder mit einer maximalen Kraft mindestens eines Aktuators, und/oder der Merkmale von gegenüber dem Roboter äußeren Belastungen.

**Claims**

1. A method for controlling a robot (1) comprising at least one part that can be deformed by a set of actuator(s) (2) implemented by computer, each point of a set of point(s) (3), called effecter point(s) of the robot, having to follow a determined trajectory, the robot being defined by a model of nodes and a matrix K defining a variation of the internal forces of the robot at each node as a function of the variation of position of the nodes, the method being **characterized in that**, to determine the control intended for each actuator on an ith control computation step:

   i/ the values of the matrix K are updated as a function of the current position of the nodes of the robot;
   ii/ the current values of the Jacobean matrix J of a vector $\delta(x)$ are determined, where x is a position vector of the nodes and the vector $\delta(x)$ relative to the displacement of each actuator controlled for a movement of the robot (1) and includes at least one subset of line(s) relative to each effecter point and indicating the coordinates of the deviations between the position of said effecter point and its determined trajectory, and at least one subset of line(s) indicating the displacement of each actuator, $\Delta x$ that bears out: $- K.\ \Delta x = p + f(x_{i-1})$ is determined, where $\Delta x$ represents a variation of the vector x, the vector p represents the external forces being exerted on the robot, K is the matrix updated in the step i/, $x_{i-1}$ is the current position vector of the nodes and $f(x_{i-1})$ is the vector of the internal forces being exerted on the robot in its current position, $X_{free} = x_{i-1} + \Delta x$ is computed, as well as the values of the vector $\delta(x_{free})$;
   iii/ the values of the matrix $W = J.\ K^{-1}.\ J^T$ are computed, where $K^{-1}$ is the inverse matrix of K and $J^T$ is the transposed matrix of J; and
   iv/ the equation $\delta = W.\ \lambda + \delta_0$ is solved, to determine the values of the vectors $\delta$ and $\lambda$ at said ith computation step, where $\lambda$ is a vector including, for each line of the vector $\delta$ relative to an effecter point, a line including a zero value and, for each line of the vector $\delta$ relative to an actuator, a line including a value of load exerted by the actuator corresponding to the indicated displacement, and $\delta_0$ is a vector equal to $\delta(x_{free})$; and
   v/ the control command intended for each actuator is deduced as a function at least of values determined in the step iv/ for the vector $\delta$ or $\lambda$.

2. The method for controlling a robot (1) as claimed in claim 1, wherein the vector $\delta$ further includes at least one subset of line(s) indicating a displacement of a point (4) of the robot subject to constraints external to the robot, and the vector $\lambda$ further includes a corresponding subset of line(s) indicating values of forces exerted by the constraints external to the robot corresponding to the indicated displacement.

**3.** The method for controlling a robot (1) as claimed in claim 1 or 2, wherein the position corresponding to the determined trajectory of an effecter point is subtracted from the position of the effecter point determined by interpolation, associated with respective interpolation coefficients, from the position of a set of said node(s) to obtain the subset of lines of the vector $\delta(x)$ relative to the effecter, and wherein, in said same subset of lines of the Jacobean matrix J, the values in the columns which correspond to said nodes are a function of said interpolation coefficients.

**4.** The method for controlling a robot (1) as claimed in one of the preceding claims, wherein a fixing point of an actuator (2) is an interpolation of node(s) each associated with a non-zero interpolation coefficient, and at least one line of the matrix J is determined as a function of a direction of actuation of the actuator, each term of said line being zero apart from those on the columns of said node or of said nodes.

**5.** The method for controlling a robot (1) as claimed in any one of the preceding claims, wherein, in the step iii/, the equation $\delta = W. \lambda + \delta_0$ is solved by an iterative algorithm of Gauss-Seidel type, incorporating the constraints linked to the directions of actuation, to the stop limits and/or to a maximum load exerted by at least one actuator, and/or characteristics of constraints external to the robot.

**6.** A computer program for controlling a robot (1) comprising at least one part that can be deformed by a set of actuator(s) (2), each point of a set of point(s) (3), called effecter point(s) of the robot, having to follow a determined trajectory, the robot being defined by a model of nodes and a matrix K defining a variation of the internal forces of the robot at each node as a function of the variation of position of the nodes, said program comprising instructions for implementing the steps of a method as claimed in one of claims 1 to 6 upon an execution of the program by processing means, to determine the control intended for each actuator on an $i^{th}$ control computation step.

**7.** A module for controlling a robot (1) comprising at least one part that can be deformed by a set of actuator(s) (2), each point of a set of point(s) (3), called effecter point(s) of the robot, having to follow a determined trajectory, the robot being defined by a model of nodes and a matrix K defining a variation of the internal forces of the robot at each node as a function of the variation of position of the nodes, the control module being **characterized in that** it is adapted, upon the determination of the control intended for each actuator on an $i^{th}$ control computation step, to update the values of the matrix K as a function of the current position of the nodes of the robot, then to determine the current values of the Jacobean matrix J of a vector $\delta(x)$, where x is a position vector of the nodes and the vector $\delta(x)$ relative to the displacement of each actuator controlled for a movement of the robot (1) and includes at least one subset of line(s) relative to each effecter point and indicating the coordinates of the deviations between the position of said effecter point and its determined trajectory, and at least one subset of line(s) indicating the displacement of each actuator, to determine $\Delta x$ satisfying: $- K. \Delta x = p + f(x_{i-1})$, where $\Delta x$ represents a variation of the vector x, the vector p represents the external forces being exerted on the robot, K is the updated matrix, $x_{i-1}$ is the current position vector of the nodes and $f(x_{i-1})$ is the vector of the internal forces being exerted on the robot in its current position, to compute $X_{free} = x_{i-1} + \Delta x$, then to compute the values of the vector $\delta(x_{free})$;
said control module being adapted to compute the values of the matrix $W = J . K^{-1} . J^T$, where $K^{-1}$ is the inverse matrix of K and $J^T$ is the transposed matrix of J, and to solve the equation $\delta = W. \lambda + \delta_0$, by determining the values of the vectors $\delta$ and $\lambda$ at said $i^{th}$ computation step, where $\lambda$ is a vector including, for each line of the vector $\delta$ relative to an effecter point, a line including a zero value and, for each line of the vector $\delta$ relative to an actuator, a line including a value of load exerted by the actuator corresponding to the indicated displacement, and $\delta_0$ is equal to $\delta(x_{free})$; and
said control module being adapted to deduce the control intended for each actuator as a function at least of said determined values of the vector $\delta$ or $\lambda$.

**8.** The module for controlling a robot (1) as claimed in claim 7, adapted to determine a vector $\delta$ further including at least one subset of line(s) indicating a displacement of a point (4) of the robot subject to constraints external to the robot, and a vector $\lambda$ further including a corresponding subset of line(s) indicating values of forces exerted by the constraints external to the robot corresponding to the indicated displacement.

**9.** The module for controlling a robot (1) as claimed in claim 7 or 8, adapted to subtract the position corresponding to the determined trajectory of an effecter point from the position of the effecter point determined by interpolation, associated with respective interpolation coefficients, of the position of a set of said node(s) to obtain the subset of lines of the vector $\delta(x)$ relative to the effecter, and adapted to determine, in said same subset of lines of the Jacobean matrix J, the values in the columns which correspond to said nodes, as a function of said interpolation coefficients.

**10.** The module for controlling a robot (1) as claimed in one of claims 7 to 9, adapted to determine a fixing point of an actuator (2) as an interpolation of node(s) each associated with a non-zero interpolation coefficient, and to determine at least one line of the matrix J as a function of a direction of actuation of said actuator, each term of said line being zero apart from those on the columns of said node or of said nodes.

11. The module for controlling a robot (1) as claimed in any one of claims 7 to 10, adapted to solve the equation $\delta = W.\lambda + \delta_0$ by an iterative algorithm of Gauss-Seidel type, by incorporating therein the constraints linked to the directions of actuation, to the limit stop limits and/or to a maximum load of at least one actuator, and/or the characteristics of constraints external to the robot.

## FIG.1

Détermination de J, vérifiant $\Delta\delta = J.\Delta x$ — 101

Détermination de K et $\delta_{free}$ — 102

Calcul de $W = JK^{-1}J^T$ — 103

Détermination des actionnements par résolution de : $\delta = W.\lambda + \delta_{free}$ — 104

Mise en oeuvre des actionnements — 105

## FIG.2

$$
\left[
\begin{array}{c}
OP_{imp1} - OP_{eff1} \\
\vdots \\
OP_{impm} - OP_{effm} \\
\text{Déplacement Act n°1} \\
\vdots \\
\text{Déplacement Act n°p} \\
\text{Contrainte obstacle n°1} \\
\vdots \\
\text{Contrainte obstacle n°n}
\end{array}
\right] = \delta(x)
$$

## FIG.3

## FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **C. DURIEZ.** Real-time haptic simulation of medical procédures involving déformations and device-tissue interactions. *Thèse d'habilitation,* 2013
- A systematic approach to the element-independent corotational dynamics of finite elements. **C. FELIPPA.** Technical Report. Center for Aerospace Structures, 2000
- **C. DURIEZ ; C. GUÉBERT ; M. MARCHAI ; S. COTIN ; L. GRISONI.** Interactive simulation of flexible needle insertions based on constraint models. *International Conférence on Medical Image Computing and Computer Assisted Intervention,* 2009, 291-299, http://hal.inria.fr/inria-00540334
- **I. PETERLIK ; M. NOUICER ; C. DURIEZ ; S. COTIN ; A. KHEDDAR.** Constraintbased haptic rendering of multirate compliant mechanisms. *EEE Trans.Haptics,* Juillet 2011, vol. 4 (3), 175-187, http://dx.doiorg/10.1109/TOH.2011.41

- **H. COURTECUISSE ; J. ALLARD ; C. DURIEZ ; S. COTIN.** Preconditioner-based contact response and application to cataract surgery. *Medical Image, Computing and Computer-Assisted Intervention (MICCAI),* 2011, http://www.lifl.fr/~courtecu/
- **C. DURIEZ ; S. COTIN ; J. LENOIR ; P. F. NEUMANN.** New approaches to catheter navigation for interventional radiology simulation. *Computer Aided Surgery,* 2006, vol. 11, 300-308
- A. Constraint-Based Haptic Rendering of Multirate Compliant. **PETERLIK, I. ; NOUICER, M. ; DURIEZ, C. ; COTIN, S. ; KHEDDAR.** Mechanisms IEEE Trans. Haptics. IEEE Computer Society Press, 2011, vol. 4, 175-187